# EUROPEAN PATENT APPLICATION

(11) **EP 0 748 096 A2**
(43) Date of publication of application: **11.12.1996**
(21) Application number: 96304081.1
(22) Date of filing: 05.06.1996
(51) Int. Cl.: H04L 29/06, G06F 3/033

(54) **Event consistent graphical user interface on a high communication latency mobile computer**

(30) Priority: 07.06.1995 US 474283
(71) Applicant: XEROX CORPORATION, Rochester New York 14644 (US)
(72) Inventor: Want, Roy, Mountain View, California 94043 (US); Schilit, William N., New York, NY 10014 (US); Goldstein, Richard J., San Francisco, California 94114 (US); Adams, Norman I., Sunnyvale, California 94087 (US)
(74) Representative: Johnson, Reginald George

(57) **Abstract**

A method for consistently interpreting events generated by a mobile computer in response to a screen display, where events are transmitted to an application server through an unreliable communication channel is disclosed. In operation, an epoch number is associated with screen drawing information created by the application server. Screen drawing information is transmitted from the application server to the mobile computer for generation of a screen display, and an event is generated in the mobile computer in response to the screen display. A combination of the event in response to the screen display and the epoch number associated with the screen display is transmitted to the application server for processing, and the epoch number received by the application server is compared to the epoch number last transmitted to the mobile computer. To ensure consistent operation of the graphical user interface on the mobile computer, the application server only processes those events having an epoch number that matches the last epoch number transmitted. Duplicate events are ignored, and events received out of order are buffered and sequentially processed in the correct order.

## Description

The present invention relates to the use of mobile computers connected by wireless (e.g. radio or infrared) links to a network. More particularly, this invention relates to operation of graphical user interfaces generated by an application server on a network and displayed on a mobile computer.

As power and flexibility of network linkable mobile computers, personal digital assistants, and other digital communication devices increase, so does the need for effective control interfaces for managing their capabilities. Fortunately, the steadily decreasing cost, power requirements, and increasing reliability of flat panel displays for mobile computers permits widespread use of attractive and easily comprehensible graphical user interfaces. As compared to user interfaces relying exclusively on text display and command line text based input, devices supporting graphical user interfaces are able to present both substantial amounts of information and options for action to even a novice user. In conjunction with cursor or mouse type controls, a graphical user interface can display icons, buttons, slides, or other symbols that initiate computer controlled actions when activated.

However, the need for communication between a mobile unit and a network based application server can introduce certain problems for mobile computers having graphical user interfaces that operate in environments having high communication latency. For example, consider a mobile unit that supports a display having a number of virtual or "soft" buttons presented on the display. A cursor, stylus, or other interface mechanism is brought into the display area of the soft button and the soft button is activated by clicking a button, tapping the screen, or any other convenient interface mechanism. Such activation of a button generates a button event request to initiate a remote application to redraw the screen to present another display that also has a number of soft buttons. In computing environments having hard wired, high speed connections between the display and the remote application, a user would not expect any substantial delay between generation of the button event and redraw of the screen. A user expects that activating the soft button will initiate an action represented on the display at the time of button activation. However, in environments having a high communication latency, delay between button activation and screen redraw may be sufficiently long so as to encourage the user to multiply activate the button. These extra button activation's could then be inappropriately and inconsistently interpreted by the application server.

While generation of multiple inappropriate button events is one typically encountered problem, other related problems in use of graphical user interfaces are also presented for mobile units only intermittently in contact with a network based application server. For example, a user drawing with a stylus or pen on the display screen of the mobile unit expects that the screen will be immediately redrawn to reflect the movement of the pen, providing visual feedback for controlling pen movement. When communication delays between the pen events generated by pen movement and the remote application supporting the pen drawing program are substantial, a problem similar to the multiple button pushing previously described also exists. The user will attempt to redraw segments temporarily not displayed, later finding that unwanted multiple segments are drawn after the mobile unit regains communication with the application server.

The use of on-board or local processing by the mobile unit can present yet another opportunity for mismatch between a user's intention's in responding to a screen display and the actual response as interpreted by an application server. If the mobile computer is operating in a local mode immediately prior to switching off or powering down the mobile unit, the user may find that the application server has no record of the status of current screen (as saved locally on the mobile unit). When the user reconnects with the application server, buttons may be activated on the display screen in a context different from that currently being interpreted by the application server.

Accordingly, a mechanism and method for ensuring consistent handling of events generated on a mobile unit in response to a screen display is needed. Such a mechanism and method will ensure that events generated by a user on a mobile unit in response to a screen display are accurately and consistently interpreted by the application server even with substantial communication delays between the mobile unit and an application server.

The present invention provides for a method for consistently interpreting events generated by a mobile computer in response to a screen display, where events are transmitted to an application server through an unreliable communication channel. In operation, an epoch number is associated with screen drawing information created by the application server. Screen drawing information is transmitted from the application server to the mobile computer for generation of a screen display, and an event is generated in the mobile computer in response to the screen display. A combination of the event in response to the screen display and the epoch number associated with the screen display is transmitted to the application server for processing, and the epoch number received by the application server is compared to the epoch number last transmitted to the mobile computer. To ensure consistent operation of the graphical user interface on the mobile unit, the application server only processes those events having an epoch number that matches the last epoch number transmitted.

In preferred embodiments, events generated in the mobile computer in response to the screen display are buffered, and the buffered events are locally drawn to the screen display of the mobile computer prior to transmission of the buffered events to the application server. Advantageously, this provides visual feedback to a user and can reduce overhead associated with sending multiple events. Another preferred embodiment of the present invention provides for transmission of a request for screen drawing information from the mobile computer to the application server, reducing inadvertent or inappropriate events created by a user viewing a screen display generated locally by the mobile unit, rather than a screen display generated by the application server.

Other objects and advantages of the present invention will become apparent to those skilled in the art upon consideration of the following description of an exemplary embodiment thereof, with reference to the drawings, in which:
Figure 1 depicts a computing environment having mobile units in infrared or radio communication with a network of workstations and peripheral devices such as printers; and
Figure 2 is a schematic representation of a mobile unit connected to the network.

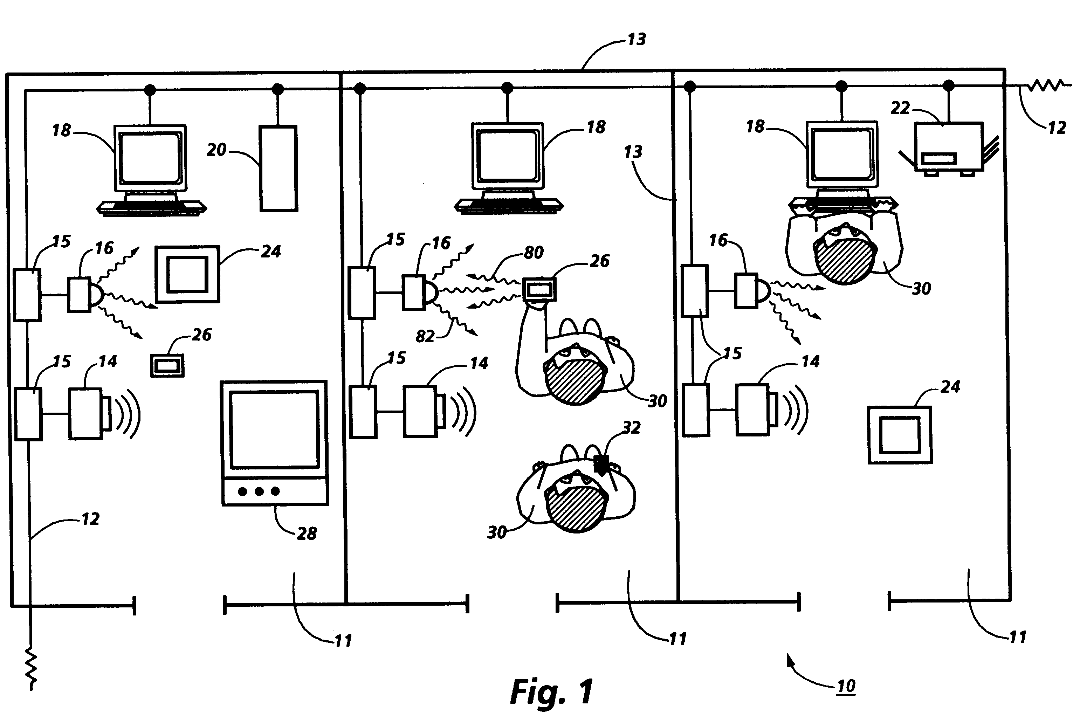

As illustrated in Figure 1, the present invention is useful for operation in a complex computing network 10 having multiple stationary computing resource units 42 and mobile computing units 40. The computing network spans several rooms 11 separated by room partitions 13 into individual communication cells. Stationary computing resource units 42 within the rooms 11 include workstations 18, 19, and 21, file server 20, printer 22, and gateway computers 15 connected together by a network backbone 12. The mobile computing units 40 include laptop computer sized "pads" 24, handheld personal digital assistant "tabs" 26, large wall sized display "boards" 28, and personal identification "active badges" 32 for clipping onto clothing of users 30. Communication between stationary computing resource units 42 and mobile units 40 is enabled by either infrared (IR) transceivers 16 or radio transceivers 14 connected to the gateway computers 15 for signal transmission to the mobile computing units 40.

The network backbone 12 can be constructed using a conventional local area network (LAN), a wide area network (WAN), or combination of LAN's and WAN's. Suitable network protocols for use in conjunction with the present invention may include 10 or 100 Mbps Ethernet, token ring, asynchronous transfer mode (ATM), TCP/IP, or any other convenient protocol or combination of protocols supporting the desired network bandwidth performance. Communication between the stationary computing resource units 42 and the mobile units 40 is mediated by the multiple IR transceivers 16 connected to gateway computers 15. Since room partitions 13 are essentially opaque to IR transmissions, IR frequency reuse between rooms 11 is possible, substantially reducing required bandwidth for operation of the computing network.

A similar reuse of transmission frequencies is also possible with radio frequencies emitted by the radio transceivers 14 if the extent of radio transmission is substantially limited in range to each room 11. For example, a single radio frequency can be used if near field components of a radio transceiver 14 are used to communicate with the mobile computing units 40. The use of near field communication is disclosed in commonly assigned US-A-5,437,057.

As will be appreciated by those skilled in the art, alternative communication schemes may be employed in the present invention, including the use of optical frequencies in the visual spectrum, ultrasonic coupling, or any other conventional electromagnetic or acoustic communication channel. In addition, frequency or time multiplexing arrangements can be used to partition rooms for consistent and unambiguous data transfer between various mobile computing units, and mobile computing units can even be temporarily tethered to the network backbone 12 by physical links such as a serial cable.

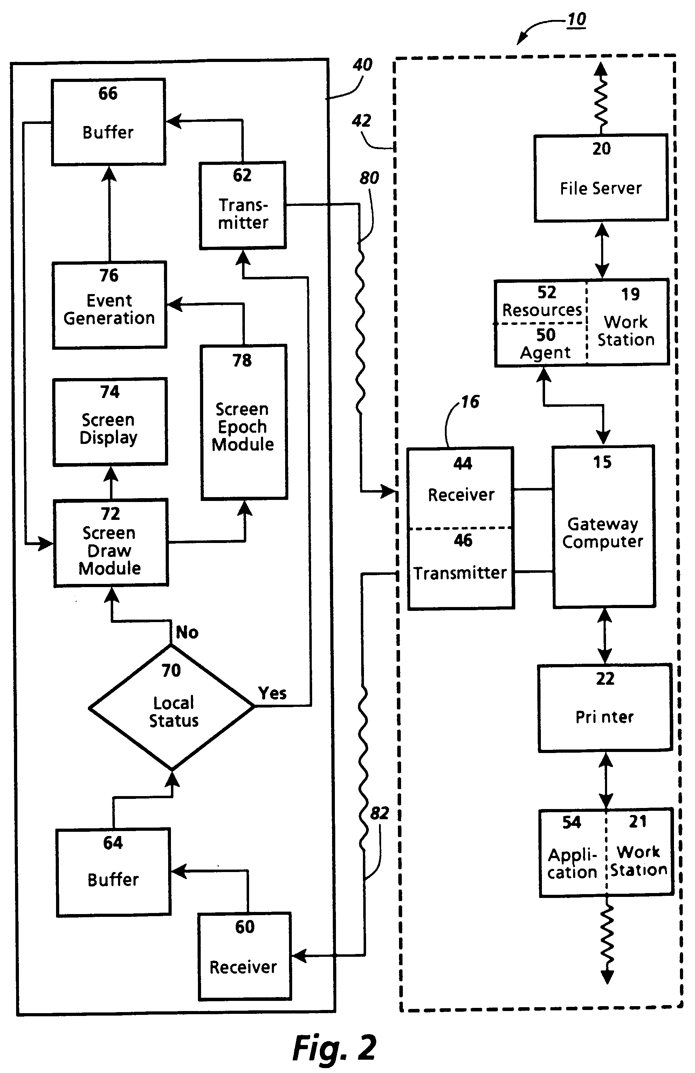

One embodiment of the present invention is schematically illustrated in Figure 2, which shows a computing network 10 having a mobile computing unit 40 (box with solid lines) in wireless connection with stationary computing units 42 (box with dotted outline). As in Figure 1, the stationary computing units 42 are a part of a computing network 10 that embraces workstations 19 and 21, gateway computer 15, file server 20, printer 22, an an IR transceiver connected to transmit (transmitter module 46) infrared signals 82 and receive (receiver module 44) infrared signals 80.

In a preferred embodiment, the transceiver 16 includes two dozen IR emitters placed at 15 degree intervals, and two detectors arranged to cover 360 degrees (not shown). Inexpensive and commercially available 850 nanometer infrared LED emitters and IR detectors are used, permitting communication speeds of up to 19,200 baud. The transceiver 16 is attached to the ceiling to provide a relatively unobstructed line of sight to all portions of a room. The transceiver 16 is connected by a conventional serial interface to an RS-232 port of the gateway computer 15, and can be provided with onboard electronics to execute link level formatting protocols or checksums. In typical operation, one transceiver is used in each room supporting interaction with mobile computing units 40.

Infrared transmissions received and transmitted by transceiver 16 are bundled into packets formed by baseband modulation of an infrared carrier signal into a sequence of four microsecond pulses. The infrared pulses are uniform, with the gap between pulses used to encode data such as logic 1, logic 0, packet start synchronization, and data byte synchronization. In an exemplary embodiment, the infrared pulses are bundled into packets that include information conveying packet type, packet length (typically 0 255 bytes), packet destination (4 byte address), sequence number (1 byte), packet source (4 byte address), data payload (up to 247 bytes), and a checksum (2 byte). Because infrared packet collisions are difficult to detect, in operation a request bit in the packet type field can be used to request acknowledgement of receipt of a transmitted packet, with retransmission of the packet occurring if an acknowledgement is not received.

Upon receipt of the infrared data packet (e.g. infrared signal 80 in Figure 2), the data is directed by gateway computer 15 to a dedicated software agent 50 that exclusively supports receipt and transmission of data to a single mobile computing unit 40. Using techniques known to those skilled in the art, in conjunction with the gateway computer 15 the software agent 50 interprets, verifies, and processes the transmitted data. For example, duplicate events having a same transmission sequence number, errors in checksum, or other appropriate error events are identified, corrected, or ignored, with events received out of order being buffered and sequentially processed in the correct order. As will be appreciated, such error correction processing can take place at the gateway computer, at the workstation supporting the software agent, or any other appropriate processing venue.

After being assured that transmitted data (such as an event request or data request) is not an error, the software agent 50 checks with a workstation supported resource module 52 to verify proper authorization and availability of a requested computer resource. For example, the transmitted data may be interpreted as an event request for action or a data request from a computer resource such as a workstation supported software application, including but not limited to an operating shell, mail, calendar, or word processing program. After verifying that the mobile computing unit 40 has authorization to access an application 54, software agent 50 routes the data request to the correct workstation 21 supporting the desired application 54, by way of the network backbone 12. The application 54 may in turn utilize other resources such as file server 20, workstation 19, or printer 22, before sending screen update data back to software agent 50 for routing via gateway computer 15 to a transceiver 16 able to communicate with the mobile computing unit 40. A more detailed explanation of this software agent 50 mediated control and interaction scheme is disclosed in US-A-5,485,634.

To ensure consistent screen display interactions by the mobile computing unit 40, the agent 50 appends an epoch number associated with screen update data created by the application 54. The routed screen update data, packaged as gaps in infrared pulses that are grouped into packets as previously described, is transmitted as infrared signal 82 to a conventional infrared receiver 60 of the mobile computing unit 40. The screen update data is temporarily stored in buffer 64, before being passed to a screen draw module 72 that redraws screen display 74 of the mobile computing unit 40. The associated epoch number is stored in a screen epoch module 78. To ensure that the screen display 74 has not been locally changed when the mobile computing unit 40 was not communicating with other units in computer network 10, a local status module 70 checks for a local status bit that is toggled as true if in fact the local status of the screen display has changed since the last communication with the application 54. If local status of the screen display is not in the same state as expected by an application 54 due to local processing, the current display state is transmitted to the gateway computer 15 and agent 50 for appropriate data reconciliation before further processing.

If the local status is unchanged (false local status bit), the screen draw module 72 draws the requested screen display 74. A user responding to the screen display 72 can push a button, move a cursor, use a stylus or pen, or otherwise generate a data event that is recorded by an event generation module 76. The data passes to a data buffer 66 prior to transmission by infrared transmitter 62. Use of the buffer 66 allows multiple transmissions until verification of receipt of signal is indicated. Additionally, the buffer 66 is useful for enabling immediate visual feedback to a user. For example, the local status bit can be set to true and the event data simultaneously directed from buffer 66 to the screen draw module 72 for display on the screen display 72. This is particularly useful for circumstances where visual feedback on the display is expected by the user even if the mobile computing unit is temporarily out of communication with the transceiver 16 and gateway computer 15.

To ensure that the data event is properly associated with a particular screen display 74, a combination of the screen update data in response to the screen display and the epoch number associated with that screen update data and previously stored in the screen epoch module 78 is transmitted to the agent 50 (acting as an intermediary for an application server, workstation, or other computing unit) for processing. The epoch number received by the agent 50 is compared to the epoch number last transmitted with the screen update data to the mobile computing unit 40. To ensure consistent operation of the graphical user interface on the mobile computing unit 40, the agent only processes those events having an epoch number that matches the last epoch number transmitted.

To better appreciate operation of this invention, a pseudo code description useful for implementation of one embodiment of the present invention is disclosed hereinafter. As can be seen, a system operating in accordance with the presented pseudo code drives a screen display of a mobile computing unit in response to transmission from a network based application running on a workstation or other application server of screen update data, and transmits event generation data from the mobile computing unit to the application server is presented as Table 1. Pseudo code for network based host (e.g. workstation 19) operation is presented in Table 2.

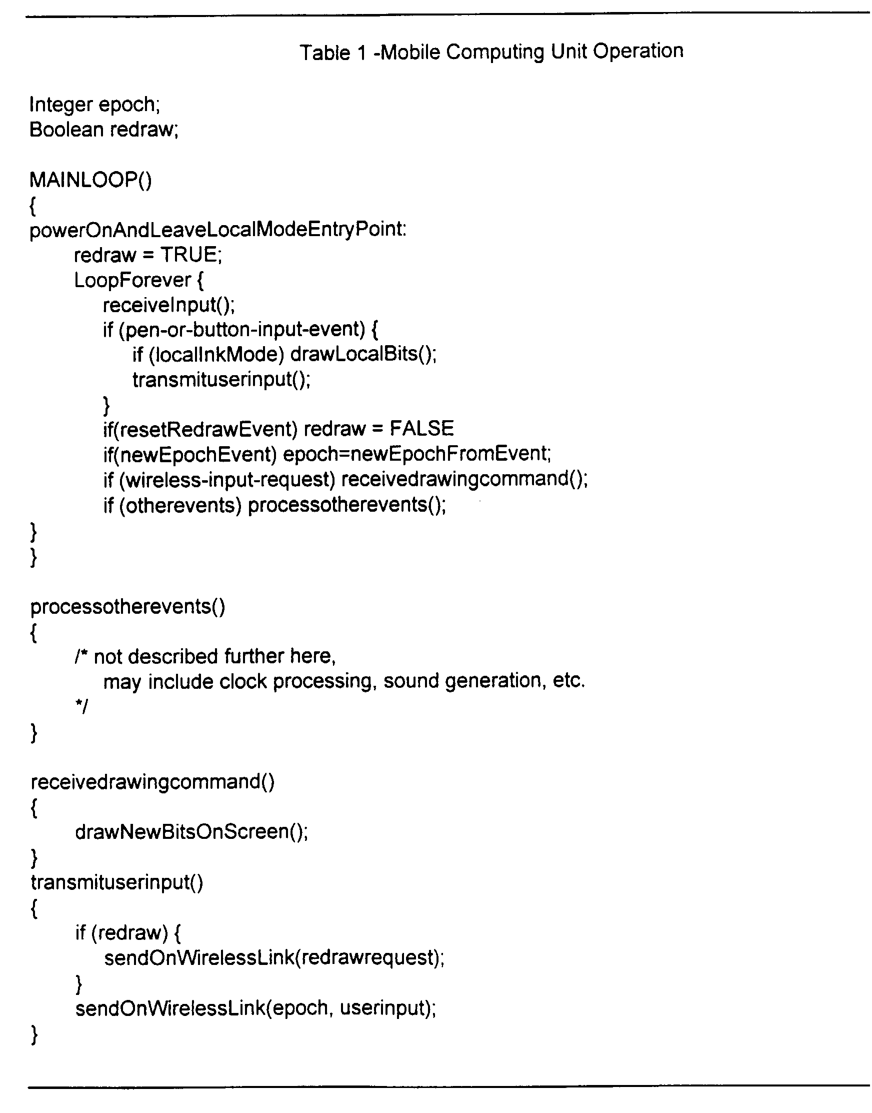

As will be appreciated by inspection of the pseudo code presented in Table 1, after start up initialization the process running on the mobile computing unit 40 enters an infinite loop for processing data communications received either from the computing network 10 or generated locally on the mobile computing unit 40. When an input event is received, the mobile computing unit first determines if it is a local event such as a pen or button drawing. If the event is local, the event is transmitted to the gateway computer and software agent 50 while being simultaneously drawn on the local screen display for immediate user feedback. Alternatively, if the event is a screen redraw request generated by application 54 running on workstation 21 for example, the local screen display 74 on the mobile computing unit 40 is redrawn, and the screen is tagged with an epoch number previously transmitted by agent 50 along with the screen update data. When a user initiated event occurs in response to a screen display, the conjoined epoch number and user input is transmitted back to agent 50 (by way of transmitter 62, receiver 44, and gateway computer 15). Note that other events such as clock processing or sound generation are also contemplated, and do not require handling by the screen display update (screen draw module 72) and epoch numbering module 78 described herein in relation to Figure 2. These non-screen drawing functions are generically labeled as "processotherevents" in the pseudo code. Specific details for implementation of procedures drawNewBitsOnScreen, sendOnWirelessLink, and drawLocalBits are platform dependent and would be well known to practitioners in the art.

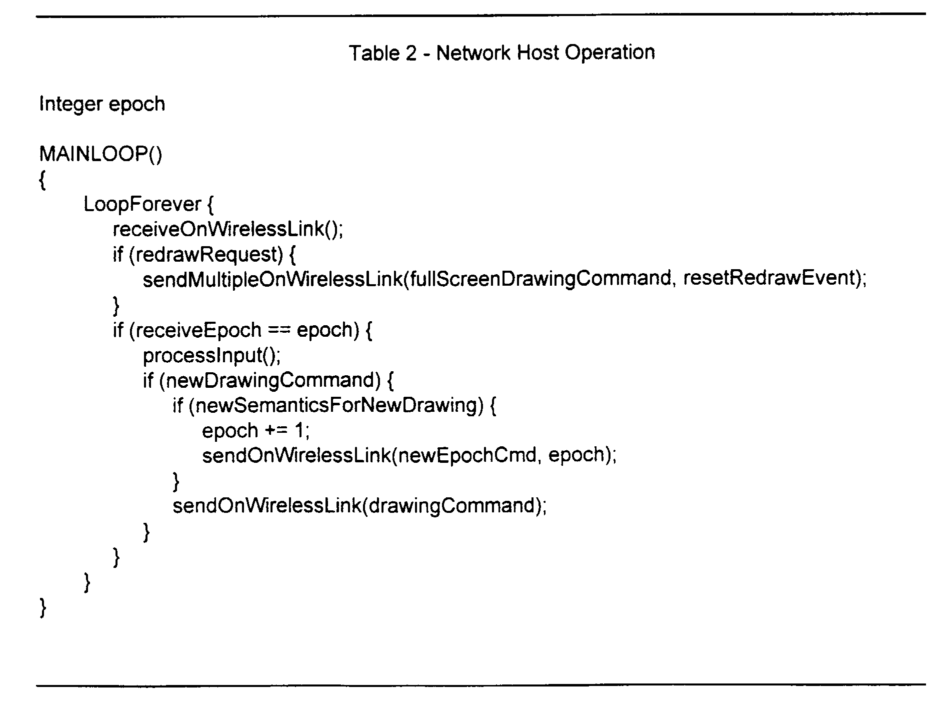

As will be appreciated by inspection of the pseudo code presented in Table 2, after start up initialization the process running on the application server (e.g. workstation 19) enters an infinite loop for processing data communications received from the mobile computing unit. When an input event is received, if the event is a screen redraw request generated by the mobile computing unit, the appropriate redraw instructions is transmitted to update the screen on the mobile computing unit. Next, the application server checks to see if the epoch number is consistent with the epoch number previously transmitted to the mobile computing unit along with the screen display update data. If the epoch number received is correct, the event is processed. If processing the event resulted in a new drawing command requiring a new epoch, then a new epoch number is generated (by incrementing in the above pseudo code, although decrementing or other alternative unique counting scheme could be readily employed, as those skilled in the art will appreciate). Advantageously, the epoch number does not have to be automatically incremented with each screen redraw request. Instead, an epoch number need only be sent when an application enters a state (or a semantic context, with respect to a user observing the screen display of the mobile computing unit) that renders old events generated by the mobile computing unit incorrect or irrelevant. This reduces the processing and transmission overhead associated with use of epoch numbers. Specific details for implementation of procedures receiveOnWirelessLink, processlnput, and sendOnWirelessLink used in the presented pseudo code are platform or application specific, and can be easily determined by those skilled in the art.

Pseudo code in accordance with the present invention can be implemented in any suitable computer language, including Modula-3, Pascal, C, C++, Tcl/Tk, Hypercard or processor specific assembly language. Modula-3 is a preferred language for the present embodiment of the invention because of its inclusion of threads, garbage collection, type safety, and support for modules and object oriented programming. The existence of threads is particularly important because the gateway computer 15 is a long running server that interacts with many clients (workstation supported agents/applications and mobile computing units) at the same time. Each client has its own dedicated thread, and if remote procedure calls from one client are delayed the remaining clients are not adversely affected. Without such a dedicated thread mechanism, remote procedure calls must be handled asynchronously to prevent blocking.

As will be appreciated, a computer language implementing the foregoing pseudo code can be run on a wide variety of computer processors and memory, ranging from an 8-bit microcontroller (87C524, an Intel 8051 derivative) with EPROM, onboard DRAM, or flash memory for storage of processor instructions, to advanced RISC processor based workstations with megabytes of DRAM or EDO memory, a gigabyte hard drive for virtual memory or permanent storage of applications, and access to terabyte file servers for data. The specific processor and memory choice for operation of the present invention is typically constrained by physical size and weight limitations, available power, and of course cost, and can be readily determined by those skilled in the art.

While the present invention has been described in conjunction with specific embodiments thereof, it is evident that many alternative, modifications, and variations will be apparent to those skilled in the art. Accordingly, the various embodiments described herein should be considered illustrative, and not limiting the scope of the present invention as defined in the following claims.

## Claims

1. A method for consistently interpreting events generated by a mobile computer in response to a screen display and transmitted to an application server through an unreliable communication channel, the method comprising the steps of
associating an epoch number with screen drawing information created by the application server,
transmitting screen drawing information from the application server to the mobile computer for generation of a screen display,
generating an event in the mobile computer in response to the screen display,
transmitting a combination of the event in response to the screen display and the epoch number associated with the screen display to the application server for processing, and
comparing an epoch number received by the application server to the epoch number last transmitted to the mobile computer, and processing in the application server only those events having an epoch number that matches the last epoch number transmitted.

2. The method of claim 1, further comprising the steps of
buffering events generated in the mobile computer in response to the screen display, and
locally drawing the buffered events to the screen display of the mobile computer prior to transmission of the buffered events to the application server to provide visual feedback to a user.

3. The method of claim 1, further comprising the step of
transmitting a request for screen drawing information from the mobile computer to the application server.

4. A programmable mobile computer when suitably programmed for carrying out the method of any of the preceding claims, the computer including a processor, a memory, input/output circuitry and a screen display.

5. A system for providing communication between a network and a mobile computing unit through an unreliable communication channel, the system comprising
a mobile computing unit having a screen display and a transceiver for both sending events to the network and receiving data from the network, with data received from the network including screen drawing information for redrawing the screen display and an epoch number associated with the screen drawing information, and
an event generation module in the mobile computing unit for transmitting a user initiated event to the network in response to the screen display of the mobile computing unit, with the event generation module transmitting a combination of the event in response to the screen display and the epoch number associated with the screen drawing information to the network for processing of events having an epoch number that matches the last epoch number transmitted.

6. A mobile computing system comprising
a network supporting a workstation capable of running an application, and a software agent dedicated to controlling interactions between an application and a mobile computing unit, the mobile computing unit having a screen display and a transceiver for both sending events to the software agent and receiving data from the application as mediated by the software agent, with data received including screen drawing information for redrawing the screen display of the mobile unit and an epoch number associated with the screen drawing information, and
an event generation module in the mobile computing unit for transmitting a user initiated event to the network in response to the screen display of the mobile computing unit, with the event generation module transmitting a combination of the event in response to the screen display and the epoch number associated with the screen drawing information to the network for processing by the software agent of events having an epoch number that matches the last epoch number transmitted.
